# EUROPÄISCHE PATENTSCHRIFT

(11) **EP 1 086 110 B1**
(45) Veröffentlichungstag und Bekanntmachung des Hinweises auf die Patenterteilung: **06.08.2003**
(21) Anmeldenummer: 99923555.9
(22) Anmeldetag: 07.05.1999
(51) Int. Cl.: C07F 7/16

(54) **VERFAHREN ZUR HERSTELLUNG VON ALKYLHALOGENSILANEN**
METHOD FOR PRODUCING ALKYL HALOGENOSILANES
PROCEDE DE PRODUCTION D'ALKYLHALOGENOSILANES

(30) Priorität: 14.05.1998 DE 19821628
(43) Veröffentlichungstag der Anmeldung: 28.03.2001
(73) Patentinhaber: GE Bayer Silicones GmbH & Co. KG, 40699 Erkrath (DE); Pechiney Electrometallurgie, 92087 Paris Cedex 21 (FR)
(72) Erfinder: MARGARIA, Thomas, F-74190 Passy (FR); STEINER, Mathias, Sven, D-51373 Leverkusen (DE); ARMBRUST, Ralph, D-51375 Leverkusen (DE)
(86) Internationale Anmeldenummer: EP9903146
(87) Internationale Veröffentlichungsnummer: WO99060001

(56) Entgegenhaltungen:
- US-A- 5 596 119

## Beschreibung

Die vorliegende Erfindung betrifft ein Verfahren zur Herstellung von Alkylhalogensilanen durch Umsetzung von Alkylhalogenid mit Silicium in Gegenwart eines Katalysators und gegebenenfalls weiteren Promotoren, wobei das eingesetzte Silicium bestimmte Anteile an Phosphor und Zinn enthält.

Das grundlegende Verfahren zum Herstellen von Methylchlorsilanen ist die direkte Umsetzung von gemahlenem Silicium mit Methylchlorid in Gegenwart von Kupfer als Katalysator. Die Umsetzung ist dem Fachmann als "Rochow-Synthese" bekannt und in der US-A 2 380 995 beschrieben.

Nach diesem Verfahren erhält man eine Mischung von Methylchlorsilanen, bei der Dichlordimethylsilan (Di) den Hauptanteil stellt. Darüber hinaus bilden sich Methyltrichlorsilan (Tri) sowie weitere Produkte, wie z.B. Trimethylchlorsilan (Mono), Tetramethylsilan (TMS), Methylhydrogendichlorsilan (MeH) und höhersiedende Reaktionsprodukte (HS).

Seit der Entdeckung der Synthese hat es eine Vielzahl von Aktivitäten gegeben, die sich damit beschäftigten, das Verfahren zur Durchführung der Synthese zu verbessern und den Anteil an Dichlordimethylsilan zu erhöhen, d.h. die Synthese möglichst selektiv im Hinblick auf die Bildung von Dichlordimethylsilan zu führen.

Letzteres erreicht man vor allem durch das Beachten von Reinheitskriterien bezüglich der Rohstoffe und durch den gezielten Einsatz von Promotoren. Bekannte Promotoren sind dabei gemäß EP-A 223 447 Zink, Zinn und Phosphor, elementar oder in Form ihrer Verbindungen.

In der Vergangenheit wurde schwerpunktmäßig die Ausbeutesteigerung sowie Verbesserung der Di-Selektivität bearbeitet. Das Nebenproduktspektrum ist aber aus wirtschaftlichen Gründen ebenso wichtig. Gängige Kontaktmassen weisen z.B. den Nachteil auf, daß der MeH-Anteil, ein Indiz für unerwünschte Crack-Prozesse des Methylchlorid-Alkylchlorsilangemisches, zu hoch ist. Außerdem nachteilig ist die Bildung von Hochsiedern (hauptsächlich Disilane).

Aufgabe der vorliegenden Erfindung war daher die Bereitstellung eines Verfahrens zur Herstellung von Alkylhalogensilanen, das sich durch einen geringen Anteil an MeH und Hochsiedern (HS), eine hohe Produktionsrate und eine hohe Selektivität auszeichnet.

Überraschenderweise wurde nun gefunden, daß der Einsatz von mit bestimmten Anteilen an Phosphor und Zinn dotiertes Silicium diese Anforderungen erfüllt.

Gegenstand der vorliegenden Erfindung ist daher ein Verfahren zur Herstellung von Alkylhalogensilanen durch Umsetzung von Alkylhalogenid mit Silicium in Gegenwart eines Katalysators und gegebenenfalls weiteren Promotoren bei Temperaturen zwischen 250 und 370'C, wonach ein Silicium eingesetzt wird, das
250 bis einschließlich 850 ppm Phosphor und
25 bis 85 ppm Zinn
enthält. Das Verhältnis von Phosphor zu Zinn beträgt vorzugsweise 4 : 1 bis 14 : 1.

In einer weiteren bevorzugten Ausführungsform der Erfindung enthält das Silicium 280 bis 640 ppm Phosphor und 30 bis 65 ppm Zinn, bei einem Verhältnis Phosphor zu Zinn von 5 : 1 bis 10 : 1.

Besonders bevorzugt sind 400 bis 500 ppm Phosphor und 45 bis 55 ppm Zinn, bei einem Verhältnis Phosphor zu Zinn von 7,5 : bis 8,5 : 1.

Auf diese Weise gelingt es überraschenderweise, die Produktionsraten um bis zu 32 % zu erhöhen, eine hohe Selektivität an Dimethyldichlorsilan zu erzielen und die Anteile an unerwünschten Nebenprodukten (MeH und HS) zu verringern.

In den zuvor genannten bevorzugten Ausführungsformen ist die gleichzeitige Anwesenheit von Zink besonders bevorzugt.

Als Katalysator im Sinne der Erfindung können alle gängigen Kupferkatalysatoren für die Rochow-Synthese eingesetzt werden, beispielhaft werden genannt: teiloxidiertes Kupfer (Cu°/Cu₂O/CuO) (US-A 4 500 724), Mischungen aus metallischem Kupfer und Cu₂O/CuO (DE-A 3 501 085), Cu₂Cl₂, CuCl₂ (US-A 4 762 940), Cu-Formiat (US 4 487 950), etc.. Bevorzugt wird teiloxidiertes Kupfer mit den Bestandteilen Cu°, Cu₂O und/oder CuO eingesetzt. Teiloxidiertes Kupfer hat dabei vorzugsweise folgende Zusammensetzung: Cu°: 0 bis 30 Gew.-%, Cu₂O: 30 bis 90 Gew.-% und CuO: 10 bis 60 Gew.-%, wobei die Summe aller Bestandteile 100 % ergibt. Der Katalysator, d.h. Kupfer und/oder eine kupferhaltige Verbindung, wird dabei Vorzugsweise in einer Menge von 0,05 bis 10 Gew.-%, besonders bevorzugt 0,1 bis 7 Gew.-%, bezogen auf Silicium, eingesetzt. Der Katalysator kann mit Promotorelementen, wie z.B. Zinn, dotiert sein.

Die Dotierung des Siliciums, das vorzugsweise eine Reinheit von > 95 %, besonders bevorzugt > 98 % aufweist mit Phosphor und Zinn, kann während dessen Herstellung (carbothermischer Prozeß) oder auch im anschließenden Refining erfolgen. Für den Fall der Phosphordotierung während der carbothermischen Herstellung von Silicium ist die Einstellung des gewünschten Phosphorgehalts durch Einbringen von Phosphaten wie z.B. Eisenphosphat, Aluminiumphosphat oder Calciumphosphat, Eisen-Phosphor-Legierungen und/oder Aluminium-Phosphor-Legierungen bevorzugt. Für den Fall der Phosphordotierung des flüssigen Siliciums vor, während oder nach dem Refining ist die Einstellung des gewünschten Phosphorgehalts durch Einbringen einer Eisen-Phosphor-Legierung oder einer Aluminium-Phosphor-Legierung oder Phosphaten bevorzugt. In allen Fällen ist die Einstellung des gewünschten Zinngehalts durch Einbringen von elementarem Zinn in das flüssige Silicium nach dem Refining bevorzugt. Die Teilchengröße des eingesetzten Siliciums kann beliebig gewählt werden, beträgt aber vorzugsweise zwischen 30-500 µm.

Das erfindungsgemäß dotierte flüssige Silicium kann in Kokillen gegossen werden, oder gemäß EP-A 372 918 verdüst werden, oder aber gemäß EP-A 610 807 bzw. EP-A 522 844 granuliert werden.

Spezielle Siliciumsorten, wie z.B. in DE-A 40 37 021 oder EP-A 685 428 beschrieben, können ebenfalls als Rohmaterial verwendet werden.

Das erfindungsgemäß eingesetzte Silicium weist vorzugsweise neben der gewünschten Menge an Phosphor und Zinn folgende Mengen der Nebenbestandteile Eisen, Aluminium und Calcium auf.
- Eisen: 0,1 - 0,8 %, bevorzugt 0,250 - 0,65 %,
- Aluminium: 0,05 - 0,4 %, bevorzugt 0,16 - 0,21 %,
- Calcium: 0,005 - 0,1 %, bevorzugt 0,01 - 0,07 %.

Darüber hinaus können noch weitere Spurenelemente vorhanden sein, wie z. B. Ti, V, Mn.

Als Alkylhalogenide im Sinne der Erfindung werden alle gängigen C₁-C₈-Alkylhalogenide eingesetzt, bevorzugt Methylchlorid.

Als Promotorsubstanzen sind neben Zink oder Zinkverbindungen, Aluminium oder Aluminiumverbindungen, Schwefel- oder Schwefelverbindungen (wie z.B. gemäß DE-P 1 953 231, S 7) bzw. Indium- oder Indiumverbindungen alleine oder in Kombination bevorzugt.

Als Verbindungen der Elemente Zn, Al, S und/oder In kommen z.B. Oxide, Halogenide, Legierungen o.ä. in Frage.

Die Promotorsubstanzen werden vorzugsweise, sofern sie vorhanden sind, der Kontaktmasse in folgenden Mengen zugesetzt:
- Zink: 10-10.000 Teile pro 1.000.000 Teile Silicium und/oder
- Aluminium: 0,01-1 Gew.-%, bezogen auf Silicium und/oder
- Indium: 20-2500 Teile pro 1.000 000 Teile Silicium,
- Schwefel: 5-2000 Teile pro 1.000 000 Teile Silicium,
- Eisen: 5-2000 Teile pro 1.000 000 Teile Silicium.

Die Promotorsubstanzen Zn, Al, Fe, In und/oder S können ebenfalls dem verwendeten Silicium bereits zuiegiert worden sein (z.B. US-A 50 49 343, US-A 49 46 978, WO 94/00 799).

Bevorzugt werden Eisen, Aluminium, Phosphor oder Zink, alleine oder in Kombinationen, in elementarer Form oder in Form ihrer Verbindungen eingesetzt. Besonders bevorzugt wird Zink alleine in einer Menge von 20 bis 2000 Teilen pro 1 000 000 Teile Silicium eingesetzt.

Das Verfahren wird üblicherweise in dem für die Rochow-Synthese gängigen Temperatur- und Druckbereich durchgeführt.

Bevorzugt ist eine Temperatur zwischen 270-370°C und ein Druck von 1 bis 10 bar.

Diese Kontaktmasse, d.h. Silicium, Kupfer und gegebenenfalls ein oder mehrere Promotor(en), kann unbehandelt oder mit einem geeigneten Verfahren vorbehandelt bzw. präformiert dem Reaktor zur Reaktion zugeführt werden. Derartige Verfahren sind beispielsweise in Voorhoeve: "Orsanohalosilanes- Precursores to Silicones", Elsevier N 1967 S. 129 beschrieben.

Das erfindungsgemäße Verfahren ist auch nicht auf eine bestimmte Verfahrenstechnik bei der Direktsynthese beschränkt. So kann die Reaktion diskontinuierlich oder kontinuierlich geführt werden, und es kann sowohl im Fließbett, im Rührbett als auch im Festbett gearbeitet werden.

Die nachfolgenden Beispiele sollen die vorliegende Erfindung näher illustrieren, sind aber keinesfalls einschränkend zu verstehen (%-Angaben bedeuten Gew.-%).

### Ausführungsbeispiele

Alle Experimente wurden in einem Rührbettreaktor aus Glas, innerer Durchmesser = 30 mm, der mit einem Spiralrührer ausgestattet ist, durchgeführt. Zum Einsatz kam ein Silicium mit einer Reinheit von mindestens 98,8 % mit einer Korngrößenverteilung von 71 bis 160 µm.

Die Zusammensetzung des eingesetzten Siliciums ist in der nachfolgenden Tabelle 1 aufgeführt.

Die Dotierung des Siliciums mit Zinn und Phosphor (Mengenverhältnisse siehe Tabelle 1) erfolgte dabei durch die Dotierung mit entsprechenden Anteilen an Zinn und Eisen- Phosphoriegierung (30% Phosphor) zu geschmolzenem Silicium. Das dotierte Silicium wurde im Anschluß daran und nach einem Abkühlschritt zerkleinert und auf die oben aufgeführte Teilchengröße gesiebt.

**Tabelle 1 ***

| Silicium Probe Nr. | P (in Si) [ppm] | Sn (in Si) [ppm] | P/Sn | Fe [%] | Al [%] | Ca [%] |
|---|---|---|---|---|---|---|
| 1 (V) | 20 | 2 | 10 | 0,38 | 0,18 | 0,032 |
| 2 (V) | 110 | <3 | >36,7 | 0,36 | 0,16 | 0,054 |
| 3 (V) | 450 | <3 | >150 | 0,4 | 0,16 | 0,059 |
| 4 (V) | 130 | 53 | 2,5 | 0,38 | 0,17 | 0,065 |
| 5 | 420 | 53 | 7,9 | 0,41 | 0,15 | 0,052 |
| 6 (V) | 120 | 103 | 1,2 | 0,38 | 0,16 | 0,053 |
| 7 (V) | 450 | 101 | 4,5 | 0,49 | 0,15 | 0,045 |
| 8 | 280 | 48 | 5,8 | 0,47 | 0,16 | 0,052 |
| 9 | 290 | 31 | 9,4 | 0,44 | 0,15 | 0,065 |
| 10 | 340 | 51 | 6,7 | 0,54 | 0,16 | 0,04 |
| 11 | 410 | 49 | 8,4 | 0,53 | 0,16 | 0,069 |
| 12 | 550 | 44 | 12,5 | 0,56 | 0,15 | 0,066 |
| 13 | 550 | 67 | 8,2 | 0,58 | 0,15 | 0,046 |
| 14 | 590 | 63 | 9,4 | 0,61 | 0,17 | 0,048 |
| 15 (V) | 1110 | 93 | 11,9 | 0,65 | 0,15 | 0,047 |
| 16 | 640 | 74 | 8,6 | 0,54 | 0,14 | 0,058 |
| 17 (V) | 650 | 19 | 34,2 | 0,56 | 0,15 | 0,066 |
| 18 (V) | 200 | 80 | 2,5 | 0,46 | 0,16 | 0,049 |
| 19 (V) | 200 | 20 | 10 | 0,43 | 0,15 | 0,046 |
| 20 (V) | 23 | 49 | 0,5 | 0,54 | 0,16 | 0,052 |
| 21 | 850 | 48 | 17,7 | 0,65 | 0,16 | 0,049 |
| * V = Vergleichsbeispiel | | | | | | |

Alle Mengenangaben (% oder ppm) sind Gewichtsanteile und beziehen sich auf eingesetztes Silicium. Die Einheit ppm bedeutet: Teile pro Million Teile Silicium.

In der vierten Spalte der Tabelle 1 steht der Massenquotient von Phosphor zu Zinn. In den Spalten fünf bis sieben sind die Anteile der wichtigsten Nebenbestandteile des Siliciums aufgelistet.

Bei allen Beispielen wurden 40 g Silicium eingesetzt, die vor der Reaktion mit dem Kupferkatalysator (teiloxidiertes Kupferpulver mit einem Kupfergehalt von 86 %) und dem Zinkpromotor (Zinkoxid) homogenisiert wurden.

Methylchlorid wurde unter einem Druck von 2 bar von unten über eine Glasfritte durch die Kontaktmasse geleitet. Der Durchsatz an Methylchlorid wurde konstant gehalten und betrug in allen Fällen ca. 1,81/h. Nach Durchlaufen der Induktionsphase wurde eine stationäre Versuchsphase eingestellt.

Bei den Beispielen 1 bis 15 wurden jeweils 3,2 g Kupferkatalysator und 0,05 g Zinkoxid (das sind 1004 ppm Zink) mit dem Silicium vermischt. Die stationäre Phase wurde bei einer Temperatur von 300°C eingestellt. Die Ergebnisse sind in Tabelle 2 dargestellt.

Bei den Beispielen 16 bis 38 wurden die Mengen an Kupferkatalysator und Zinkoxid sowie die Temperatur der stationären Phase variiert. Die Ergebnisse sind in Tabelle 3 dargestellt.

In der stationären Phase wurde die Menge an gebildetem Rohprodukt pro Zeiteinheit bestimmt. In den Tabellen 2 und 3 steht diese Angabe zur Produktionsrate in der Spalte: Silane [g/h]. Die Ermittlung der Einzelbestandtteile erfolgte gaschromatographisch. Die Angaben erfolgen in Gew.-%, bezogen auf das Rohprodukt der Reaktion. Die Abkürzungen der Reaktionsprodukte bedeuten:
- MeH =: Methyldichlorsilan
- Mono =: Trimethylchlorsilan
- Tri =: Methyltrichlorsilan
- Di =: Dimethyldichlorsilan
- HS =: Hochsieder.

Hochsieder sind Produkte mit Siedepunkt >75°C bei Normaldruck (hauptsächlich Disilane). Die Spalte T/D gibt den Quotienten aus Methyltrichlorsilan zu Dimethyldichlorsilan wieder. Je kleiner dieser Wert ist, umso besser ist die Selektivität der *Reak*tion.

Die angegebenen Werte der Beispiele sind Mittelwerte aus zwei Experimenten. Die Ergebnisse eines Experiments sind Mittelwerte aus 4 Einzelbestimmungen, die innerhalb der stationären Phase bestimmt wurden.

Die Beispiele 1 bis 4, 6, 7, 15, 18, 19, 22 bis 32 sind Vergleichsbeispiele (V). Alle übrigen Beispiele repräsentieren die Erfindung.

**Tabelle 2**

| Beispiel | Silicium Nr. | Silane [g/h] | MeH [%] | Mono [%] | Tri [%] | Di [%] | T/D | HS [%] |
|---|---|---|---|---|---|---|---|---|
| 1 (V) | 1 | 5,7 | 1,9 | 2,9 | 6,8 | 83,5 | 0,081 | 4,3 |
| 2 (V) | 2 | 4,7 | 2,1 | 1,4 | 5,7 | 87 | 0,066 | 3,3 |
| 3 (V) | 3 | 3,6 | 2,4 | 1 | 5,6 | 85,4 | 0,066 | 5,3 |
| 4 (V) | 4 | 4,9 | 2,3 | 1,5 | 4,8 | 85,7 | 0,056 | 5,5 |
| 5 | 5 | 5,9 | 1,1 | 1,1 | 3,3 | 92,9 | 0,036 | 1,5 |
| 6 (V) | 6 | 2,2 | 3,1 | 1,5 | 11,3 | 67,5 | 0,167 | 16,3 |
| 7 (V) | 7 | 4,3 | 1,2 | 1,4 | 5,4 | 86,1 | 0,063 | 5,9 |
| 8 | 8 | 6,8 | 1,4 | 1,1 | 3,5 | 91,4 | 0,038 | 2,6 |
| 9 | 9 | 7,1 | 1,5 | 1,3 | 3,8 | 91,4 | 0,042 | 1,9 |
| 10 | 10 | 6,4 | 1,6 | 1,2 | 4,1 | 91,2 | 0,045 | 1,7 |
| 11 | 11 | 7,5 | 0,8 | 1,2 | 3,3 | 92,8 | 0,036 | 1,9 |
| 12 | 12 | 6,1 | 1 | 1,1 | 3,5 | 91,8 | 0,038 | 2,4 |
| 13 | 13 | 6,8 | 1,1 | 1,4 | 4 | 91,2 | 0,044 | 2,2 |
| 14 | 14 | 6,4 | 1,1 | 1,4 | 3,9 | 92,4 | 0,042 | 1,3 |
| 15 (V) | 15 | 4,3 | 0,8 | 1,7 | 5,3 | 89,7 | 0,059 | 2,5 |

In der Tabelle 2 wurden alle Experimente unter standardisierten Bedingungen durchgeführt (gleiche Temperatur der stationären Phase, gleiche Katalysatormenge, gleiche Zinkoxidmenge). Man erkennt dort die Vorteile der erfindungsgemäßen Dotierung des Siliciums mit Phosphor und Zinn (Beispiele 5, 7 bis 14) gegenüber einem nichtdotierten Material (Beispiel 1). Es gelingt, durch Einsatz eines verbesserten Siliciummaterials den Anteil an unerwünschten Nebenprodukten der Direkten Synthese (Rochow Reaktion) zu verringern.

Die Menge an Methyldichlorsilan kann von 2,9 % auf bis zu 1,1 % verringert werden. Die Selektivität für das Zielprodukt Dimethyldichlorsilan läßt sich von 83,5 % auf bis zu 92,9 % erhöhen. Das T/D Verhältnis verbessert sich von 0,081 auf bis zu 0,036 und der Anteil an unerwünschten Hochsiedern verringert sich von 4,3 % auf bis zu 1,3 %. Dies alles wird bei einer Steigerung der Produktionsrate erreicht.

Des weiteren zeigt die Tabelle, daß nicht alle Dotierungen mit Phosphor und Zinn zu der gewünschten Verbesserung führen. In den Vergleichsbeispielen werden vielfach schlechtere Ergebnisse als mit undotiertem Waterial erzielt.

Dies zeigt, wie wichtig eine bestimmte Menge an Phosphor und Zinn, sowie das Verhältnis von Phosphor zu Zinn sind.

**Tabelle 3**

| Bsp. | Silicium Nr. | Temp. [°C] | Zn (als ZnO) [ppm] | Katalysator [g] | Silane [g/h] | MeH [%] | Mono [%] | Tri [%] | Di [%] | T/D | HS [%] |
|---|---|---|---|---|---|---|---|---|---|---|---|
| 16 | 5 | 315 | 1325 | 2,7 | 8,5 | 1,3 | 1,2 | 3,5 | 92,4 | 0,038 | 1,6 |
| 17 | 16 | 300 | 1650 | 3,2 | 6,4 | 0,8 | 1,2 | 3,8 | 92,2 | 0,041 | 1,9 |
| 18(V) | 17 | 330 | 1630 | 3,2 | 8,8 | 2 | 0,9 | 5,6 | 89,7 | 0,062 | 1,9 |
| 19(V) | 18 | 330 | 1650 | 2,2 | 11,1 | 1,9 | 1,7 | 4,7 | 88,7 | 0,053 | 2,9 |
| 20 | 16 | 330 | 1000 | 2,2 | 11,1 | 0,7 | 1,7 | 4,2 | 91,6 | 0,046 | 1,7 |
| 21 | 16 | 300 | 1000 | 2,2 | 6 | 0,6 | 1,3 | 3,2 | 93,1 | 0,034 | 1,9 |
| 22(V) | 17 | 300 | 1000 | 3,2 | 5,3 | 0,9 | 0,9 | 4,1 | 92,3 | 0,044 | 1,7 |
| 23(V) | 19 | 300 | 1650 | 2,2 | 5,8 | 1,2 | 1,2 | 3,7 | 91 | 0,041 | 3 |
| 24(V) | 19 | 330 | 1000 | 3,2 | 9,8 | 2,9 | 1,2 | 5,4 | 87,9 | 0,061 | 2,4 |
| 25(V) | 18 | 300 | 1650 | 3,2 | 5,7 | 1,5 | 1,3 | 4,8 | 88,2 | 0,054 | 3,8 |
| 26(V) | 17 | 330 | 1650 | 2,2 | 8,2 | 1,6 | 1 | 5,4 | 90 | 0,06 | 2,1 |
| 27(V) | 18 | 330 | 1000 | 3,2 | 11,8 | 2,1 | 2,1 | 6 | 86,5 | 0,069 | 2,8 |
| 28(V) | 19 | 300 | 1000 | 2,2 | 5,3 | 1,1 | 0,9 | 3,3 | 91,9 | 0,036 | 2,8 |
| 29(V) | 20 | 315 | 1325 | 2,7 | 7,2 | 2,8 | 1,8 | 5,5 | 84,2 | 0,065 | 5,5 |
| 30 | 21 | 315 | 1325 | 2,7 | 8,9 | 0,8 | 1,2 | 3,5 | 92,7 | 0,038 | 1,8 |
| 31(V) | 3 | 315 | 1325 | 2,7 | 6 | 2,6 | 1,4 | 6,2 | 88 | 0,07 | 1,5 |
| 32 (V) | 7 | 315 | 1325 | 2,7 | 7,2 | 1,4 | 1,5 | 4,9 | 89,8 | 0,055 | 2,5 |
| 33 | 5 | 290 | 1325 | 2,7 | 6,2 | 0,8 | 1 | 2,9 | 93,1 | 0,031 | 2,2 |
| 34 | 5 | 340 | 1325 | 2,7 | 12 | 2 | 2,1 | 5,8 | 88,2 | 0,066 | 1,9 |
| 35 | 5 | 315 | 720 | 2,7 | 9,1 | 1,1 | 1,3 | 3,4 | 92,7 | 0,037 | 1,6 |
| 36 | 5 | 315 | 2000 | 2,7 | 10 | 1,3 | 1,2 | 3,6 | 91,8 | 0,039 | 2 |
| 37 | 5 | 315 | 1325 | 1,8 | 9,7 | 0,9 | 1,3 | 3,2 | 92,8 | 0,034 | 1,9 |
| 38 | 5 | 315 | 1325 | 3,6 | 9,7 | 1,7 | 1,4 | 4,5 | 90,7 | 0,05 | 2 |

In der Tabelle 3 wird die Anwendungsbreite der Erfindung auf einen weiten Temperaturbereich sowie auf eine Variation von Katalysatormenge und Menge an zugegebenen Zinkpromotor dargestellt.

## Patentansprüche

1. Verfahren zur Herstellung von Alkylhalogensilanen durch Umsetzung von Alkylhalogenid mit Silicium in Gegenwart eines Katalysators und gegebenenfalls weiteren Promotoren bei Temperaturen zwischen 250 und 370°C, **dadurch gekennzeichnet, daß** ein Silicium eingesetzt wird, das mit 250 bis 850 ppm P und 25 bis 85 ppm Sn dotiert ist.

2. Verfahren nach Anspruch 1, **dadurch gekennzeichnet, daß** das Verhältnis von P zu Sn 4:1 bis 14:1 beträgt.

3. Verfahren nach Anspruch 1 oder 2, **dadurch gekennzeichnet, daß** als Promotor Zn in Mengen von 10 bis 10 000 Teilen pro 1 000 000 Teile Silicium eingesetzt wird.

4. Verfahren nach einem oder mehreren der Ansprüche 1 bis 3, **dadurch gekennzeichnet, daß** man als Alkylhalogenid Methylchlorid einsetzt.

## Claims

1. Process for preparing alkylhalogenosilanes by reacting alkyl halide with silicon in the presence of a catalyst and, if desired, further promoters at temperatures of from 250 to 370°C, **characterized in that** the silicon used is doped with from 250 to 850 ppm of P and from 25 to 85 ppm of Sn.

2. Process according to Claim 1, **characterized in that** the ratio of P to Sn is from 4:1 to 14:1.

3. Process according to Claim 1 or 2, **characterized in that** Zn is used as promoter in amounts of from 10 to 10,000 parts per 1,000,000 parts of silicon.

4. Process according to one or more of Claims 1 to 3, **characterized in that** the alkyl halide used is methyl chloride.

## Revendications

1. Procédé de production d'alkylhalogénosilanes par réaction d'un halogénure d'alkyle avec le silicium en présence d'un catalyseur et éventuellement d'autre promoteurs à des températures de 250 à 370°C **caractérisé en ce que** l'on utilise un silicium qui est dopé avec 250 à 850 ppm de P et 25 à 85 ppm de Sn.

2. Procédé selon la revendication 1 **caractérisé en ce que** le rapport de P à Sn est 4:1 à 14:1.

3. Procédé selon la revendication 1 ou 2 **caractérisé en ce que** l'on utilise comme promoteur Zn en des quantités de 10 à 10 000 parties pour 1 million de parties de silicium.

4. Procédé selon une ou plusieurs des revendications 1 à 3 **caractérisé en ce que** l'on utilise le chlorure de méthyle comme halogénure d'alkyle.
